# EUROPÄISCHE PATENTSCHRIFT

(11) **EP 4 114 893 B1**
(45) Veröffentlichungstag und Bekanntmachung des Hinweises auf die Patenterteilung: **03.09.2025**
(21) Anmeldenummer: 21710250.8
(22) Anmeldetag: 04.03.2021
(51) Int. Cl.: C08K 3/04, C08K 3/08, C08K 7/00, C08K 7/02, C08K 7/16, C08K 9/02, C08J 3/21, C08J 7/04

(54) **ELEKTRISCH LEITFÄHIGE PASTE**
ELECTRICALLY CONDUCTIVE PASTE
PÂTE ÉLECTRIQUEMENT CONDUCTRICE

(30) Priorität: 06.03.2020 DE 102020106131
(43) Veröffentlichungstag der Anmeldung: 11.01.2023
(73) Patentinhaber: Carl Freudenberg KG, 69469 Weinheim (DE)
(72) Erfinder: SCHMIDT, Stanislaus, 68305 Mannheim (DE); SCHMIED, Benno, 67071 Ludwigshafen (DE); SCHMALZEL, Ivan, 67105 Schifferstadt (DE); SUTTER, Marco, 69469 Weinheim (DE)
(86) Internationale Anmeldenummer: PCT/EP2021/055434
(87) Internationale Veröffentlichungsnummer: WO 2021/175976

(56) Entgegenhaltungen:
- EP-A1- 3 021 329
- WO-A1-2012/152262
- WO-A1-2014/186460
- US-A1- 2010 209 690

## Beschreibung

Die Erfindung betrifft eine elektrisch leitfähige Paste umfassend einen elastischen Binder (A) und einen leitfähigen Füllstoff (B). Die Erfindung betrifft ferner ein Verfahren zur Herstellung der leitfähigen Paste, sowie seine Verwendung zum Aufbringen auf elastomere Substrate.

Elektrisch leitfähige Pasten zur Ausbildung leitfähiger Strukturen sind in der Technik bekannt und umfassen in der Regel ein Bindemittel, das mit metallischen, metallisierten oder Kohlenstoff-Partikeln gefüllt ist. Nachteilig an diesen Pasten ist, dass sie meist nur wenig oder gar nicht dehnbar sind.

Aus der EP3021329A1 ist eine elektrisch leitfähige Paste bekannt, in der ein leitfähiger Füllstoff gleichmäßig in einem Harz dispergiert ist, wobei das Harz ein Kautschuk und der leitfähige Füllstoff Metallpulver mit einem durchschnittlichen Teilchendurchmesser von 0,5 bis 10 µm ist. Es wird ein leitfähiges Material mit einem Aspektverhältnis von 10 bis 10.000 erhalten. Die Mischungen werden im Vulkanisationsverfahren hergestellt. Bevorzugt liegt das Metallpulver als Flocke, Kugel, Dendrit, Aggregat (zu einer dreidimensionalen Form aggregierte kugelförmige Primärteilchen) vor. Nachteilig an der Paste ist, dass eine hohe Leitfähigkeit nur bei hohen Füllgraden erreicht wird, da die verwendeten Materialkombinationen aus leitfähigen Partikeln hohe Füllgrade benötigen, um eine ausreichende Anzahl an Leitpfaden auszubilden. Für gute Leitfähigkeiten sind die notwendigen Füllgrade so hoch, dass eine hohe Dehnbarkeit des Verbundmateriales von z.B. 100% nicht möglich ist.

Die US2019/0043638 A1 beschreibt eine elektrisch leitende Paste, die ein Lösungsmittel enthält, ein Bindemittelharz, das keine ungesättigten Bindungen innerhalb der Moleküle enthält, und silberbeschichtete Harzteilchen als elektrisch leitenden Füllstoff, der in dem Bindemittelharz dispergiert ist. Die silberbeschichteten Harzteilchen umfassen Harzkernteilchen, die Siliconkautschukteilchen umfassen, und eine Silberbeschichtungsschicht, die die Oberfläche der Harzkernteilchen bedeckt. Der Feststoffgehalt an Additiven liegt zwischen 35-75 Gew.%. Nachteilig an dieser Beschichtung ist, dass sie kein gutes Dehnungsverhalten hat. Darüber hinaus liegt der Fokus auf Siliconbeschichtungen.

Die US 9,761,349 B2, Toyobo Co. beschreibt eine elektrisch leitende Paste, in der ein leitfähiger Füllstoff gleichmäßig in einem Harz dispergiert ist, wobei das Harz ein Kautschuk ist, der ein Schwefelatom enthält, und/oder ein Kautschuk, der eine Nitrilgruppe enthält. Der leitfähige Füllstoff ist ein Metallpulver mit einem mittleren Teilchendurchmesser von 0,5 bis 10 µm und ein leitfähiges Material mit einer Gruppe ausgewählt aus Mercaptogruppe, Aminogruppe und Nitrilgruppe auf seiner Oberfläche. Nachteilig an dieser Beschichtung ist, dass ein hoher Gehalt an Additiven eingesetzt werden muss (in den Beispielen im Bereich von 75 Gew.%). Die maximale Dehnung liegt bei 80%.

Die WO 2018/134411 A1 / Francisco Alberto S.A.U beschreibt eine dehnbare leitende Tinte, die zum Drucken elektrischer Schaltungen auf dehnbare, thermoformbare und flexible Substrate und Textilien geeignet ist. Die Tinte basiert auf Wasser und umfasst ein leitfähiges Material, ein EVA-Copolymer, ein Colösungsmittel und ein Dispergiermittel. Nachteilig an dieser Beschichtung ist, dass ein hoher Gehalt an Additiven eingesetzt werden muss. Ferner liegt die maximale Dehnung bei 80%.

WO 2012/152262 A1 beschreibt ein leitfähiges Polymermaterial aus einem Basispolymer und darin verteilten leitfähigen Feststoffpartikeln, wobei in das Basispolymer eingebettet und über sein Volumen verteilt
a) plättchenförmige, leitfähige Teilchen und/oder
b) dendritische, leitfähige Teilchen und/oder
c) andere längliche, leitfähige Teilchen mit einem Verhältnis Länge: Breite größergleich zwei als leitfähige Feststoffpartikel enthalten sind und wobei das Basispolymer ein Elastomer, ein thermoplastisches Elastomer oder eine unvulkanisierte, d.h. unvernetzte Vorstufe hiervon ist.

US 2010/0209690 A1 beschreibt eine elektrisch leitende Oberflächenfolie, wobei die Oberflächenfolie Folgendes umfasst:
eine wärmehärtende Polymerzusammensetzung, umfassend: mindestens ein wärmehärtendes Harz; und mindestens ein leitfähiges Additiv mit mehr als etwa 35 Gew.-% Silberflocken, bezogen auf das Gesamtgewicht der Zusammensetzung; wobei der spezifische Widerstand des Oberflächenfilms weniger als etwa 500 mΩ/qm beträgt. Als weitere leitfähige Füllstoffe können CNTs und silberbeschichtete Glakugeln eingesetzt werden.

WO 2014/186460 A1 beschreibt ein multifunktionelles Polymerverbundmaterial, umfassend etwa 60 % bis etwa 99 % einer Polymermatrix, etwa 0,2 % bis etwa 5 % mindestens eines sphärischen Nanoadditivs und 1) etwa 0,5 % bis etwa 6 % mindestens eines nicht sphärischen Nanoadditivs oder 2) etwa 5 % bis etwa 35 % eines Mikroadditivs. Die Nano-Zusatzstoffe können auch kugelförmige Nano-Zusatzstoffe wie Titanoxid, Zirkoniumoxid, Siliziumkarbid, Nanodiamanten , Silizium-Nanopartikel, Aluminiumoxid-Nanopartikel und Siliziumdioxid-Nanopartikel umfassen, die mit röhrenförmigen und plättchenförmigen Nano- und Mikro-Zusatzstoffen kombiniert werden können.

Aufgabe der vorliegenden Erfindung ist es, eine leitfähige Paste bereitzustellen, die eine hohe Leitfähigkeit auch bei geringen Füllgraden und hierdurch eine hohe Dehnbarkeit ermöglicht.

Diese Aufgabe wird gelöst durch eine elektrisch leitfähige Paste umfassend einen elastischen Binder (A), wobei der Binder (A) eine Dehnung, gemessen nach Norm ISO 527 (2018-06-29), von mindestens 100 %, aufweist, und einen leitfähigen Füllstoff (B), wobei der leitfähige Füllstoff (B) folgende Komponenten umfasst: mindestens einen leitfähigen kugelförmigen Füllstoff (B1), mindestens einen leitfähigen plättchenförmigen Füllstoff (B2) und mindestens einen leitfähigen stäbchenartigen Füllstoff (B3), wobei
- der kugelförmige Füllstoff (B1) Materialien aufweist, ausgewählt aus der Gruppe, bestehend aus Metallen, insbesondere Übergangsmetallen, Erd- und Alkalimetallen und ihren Salzen, metallisiertem Glas, metallisierter Keramik, Kohlenstoff und deren Gemische,
- wobei der plättchenförmige Füllstoff (B2) Materialien aufweist ausgewählt aus der Gruppe, bestehend aus Metallen, insbesondere Übergangsmetallen, metallisiertem Glas, metallisierter Keramik, Kohlenstoff und deren Gemische und
- wobei der stäbchenförmige Füllstoff (B3) Materialien aufweist, ausgewählt aus der Gruppe, bestehend aus Metallen, insbesondere Übergangsmetallen, metallisiertem Glas, Kohlenstoff, insbesondere einlagigen, vorzugsweise graphenartigen, sowie mehrlagigen Kohlenstoffnanoröhrchen und Gemischen hiervon, und wobei die elektrisch leitfähige Paste auf einem elastomeren Substrat aufgebracht ist.

Überraschend wurde erfindungsgemäß gefunden, dass es die spezielle Kombination aus einem elastischen Binder (A) und einem leitfähigen Füllstoff (B), umfassend mindestens einen kugelförmigen Füllstoff (B1), mindestens einen plättchenförmigen Füllstoff (B2) und mindestens einen stäbchenartigen Füllstoff (B3) erlaubt eine leitfähige Paste bereitzustellen, die eine hohe Leitfähigkeit auch bei geringen Füllgraden und damit verbunden eine hohe Dehnbarkeit aufweist.

Ohne sich auf einen Mechanismus festzulegen, wird vermutet, dass dies durch folgenden Mechanismus möglich ist: Der plättchenförmige Füllstoff (B2) kann aufgrund seiner hohen Oberfläche leitfähige "Inseln" ausbilden, die eine hohe Leitfähigkeit in sämtliche Raumrichtungen ermöglichen. Der stäbchenartige Füllstoff (B3) ermöglicht aufgrund seiner länglichen Struktur die Formung von leitenden Brücken zwischen diesen Inseln wodurch sich in der Bindermatrix ein leitendes, dreidimensionales Netzwerk ausbildet. Hierdurch kann der Anteil an leitfähigem Füllstoff (B) geringgehalten werden, was eine hohe Dehnbarkeit der Paste ermöglicht. Der kugelförmige Füllstoff (B1) kann sich an die Oberfläche des plättchenförmigen Füllstoffs (B2) und des stäbchenartigen Füllstoffs (B3) anlagern und aufgrund seiner Morphologie Fehlstellen im Binder schließen. Dies führt zu einer Erhöhung der Berührungspunkte der Füllstoffe insgesamt und hiermit der Anzahl der leitenden Pfade innerhalb des Netzwerks. Der kugelförmige Füllstoff (B1) kann sich einzeln oder als Agglomerat anlagern und auch Fehlstellen im Binder besetzen. Dies hat den Vorteil, dass er bei einer Deformation weniger stört. Aufgrund der hohen Anzahl an Berührungspunkten kann die Paste auch nach Trocknung deformiert werden, ohne dass die Leitfähigkeit verloren geht. Das Netzwerk aus den drei verschiedenen Arten von Füllstoffen ist mithin wegen seiner besonderen Struktur in der Lage sich bei einer Deformation des Binders der Bewegung anzupassen, ohne seine Leitfähigkeit zu verlieren.

Unter einem kugelförmigen Füllstoff (B1) werden erfindungsgemäß partikelförmige Teilchen verstanden, die annähernd eine Kugelform aufweisen. Hierunter sollen auch Partikel mit einer unregelmäßigen, nicht idealen Kugelform verstanden werden.

In einer bevorzugten Ausführungsform der Erfindung weist der kugelförmige Füllstoff (B1) einen mittleren Partikeldurchmesser, gemessen nach ISO 21501-2:2019-11 (Flüssigkeits-Streulichtpartikelzähler) von höchstens 200 µm, bevorzugt von 0,02 µm bis 200 µm, noch bevorzugter von höchstens 100 µm, beispielsweise von 0,02 µm bis 100 µm, noch bevorzugter von 0,02 µm bis 50 µm und insbesondere von 0,02 µm bis 10 µm auf.

Ist der mittlere Partikeldurchmesser zu groß, so ist ein hoher Füllgrad notwendig, um eine gute Leitfähigkeit zu erzielen. Außerdem können zu große Partikel nicht in kleine Fehlstellen der Leitpfade eindringen. Ist der mittlere Partikeldurchmesser zu klein, lässt er sich nicht gut in die Polymermatrix einbinden.

Erfindungsgemäß weist der kugelförmige Füllstoff (B1) Materialien, ausgewählt aus der Gruppe, bestehend aus Metallen, insbesondere Übergangsmetallen, Erd- und Alkalimetallen und ihren Salzen, metallisiertem Glas, metallisierter Keramik, Kohlenstoff und deren Gemische auf. Besonders bevorzugt sind Kohlenstoffpartikel. Besonders bevorzugt weist der kugelförmige Füllstoff (B1) die vorgenannten Materialien und vorzugsweise Kohlenstoff, insbesondere in einem Anteil von mehr als 90 Gew.%, insbesondere von mehr als 95 Gew.%, auf.

Weiter bevorzugt beträgt der Anteil des kugelförmigen Füllstoffs (B1), bezogen auf das Gesamtgewicht der leitfähigen Paste von 0,1 bis 50 Gew. %, noch bevorzugter von 1 bis 15 Gew.%, noch bevorzugter von 1 bis 10 Gew.%, noch bevorzugter von 1 bis 8 Gew.% und insbesondere von 1 bis 5 Gew.%.

Unter einem plättchenförmigen Füllstoff (B2) werden erfindungsgemäß im Wesentlichen flache partikelförmige Füllstoffe verstanden. Insbesondere werden hierunter flache Füllstoffe verstanden mit einem Aspektverhältnis von mindestens 1 / 10 und kleiner 1 / 10^6. Der plättchenförmige Füllstoff (B2) kann auch schichtförmig angeordnet vorliegen.

In einer bevorzugten Ausführungsform der Erfindung weist der plättchenförmige Füllstoff (B2) eine mittlere Partikelgröße, gemessen nach ISO 21501-2:2019-11 (Flüssigkeits-Streulichtpartikelzähler) von höchstens 150 µm, beispielsweise von 0,02 bis 150 µm, noch bevorzugter von höchstens 100 µm, beispielsweise von 2 µm bis 100 µm und insbesondere von 5 bis 80 µm auf. Bei diesen Partikelgrößen und insbesondere bei einer Partikelgröße (B2) von 5 µm bis 80 µm, ist die Dehnbarkeit der Beschichtung besonders gut. Ist die mittlere Partikelgröße zu groß, so ist ein hoher Füllgrad notwendig, um eine gute Leitfähigkeit zu erzielen.

Erfindungsgemäß weist plättchenförmige Füllstoff (B2) Materialien, ausgewählt aus der Gruppe, bestehend aus Metallen, insbesondere Übergangsmetallen, metallisiertem Glas, metallisierter Keramik, Kohlenstoff und deren Gemische auf. Besonders bevorzugt weist der plättchenförmige Füllstoff die vorgenannten Materialien und insbesondere metallisiertes Glas, vorzugsweise in einem Anteil von mehr als 75 Gew.%, insbesondere mehr als 95 Gew.%, auf. Besonders bevorzugt sind plättchenförmige Carbonpartikel und/oder metallisiertes Glas.

Für kohlenstoffbasierte plättchenförmige Füllstoffe (B2), insbesondere für plättchenförmige Carbonpartikel, sind bevorzugte mittlere Partikelgrößen höchstens 2 µm, beispielsweise 2 µm bis 0,01 µm und insbesondere höchstens 0,8 µm, beispielsweise von 0,8 µm bis 0,02 µm, gemessen nach ISO 21501-2:2019-11 (Flüssigkeits-Streulichtpartikelzähler).

Weiter bevorzugt beträgt der Anteil des plättchenförmigen Füllstoffs (B2), bezogen auf das Gesamtgewicht der leitfähigen Paste, von 0,5 bis 50 Gew.%, noch bevorzugter von 5 bis 40 Gew.% und insbesondere von 10 bis 25 Gew.%.

Unter einem stäbchenförmigen Füllstoff (B3) wird ein Füllstoff aus im Verhältnis zu seinem Durchmesser langen Partikeln verstanden. Die Oberfläche des plättchenförmigen Füllstoffes kann Fehlstellen, Erhebungen, Vertiefungen aufweisen, oder im Wesentlichen glatt vorliegen. Auch verzweigte, astförmige, gebogene, verästelte Stäbchenformen sind denkbar.

In einer bevorzugten Ausführungsform der Erfindung weist der stäbchenförmige Füllstoff (B3) ein mittleres Aspektverhältnis von mindestens 0,1, beispielsweise von 1/10 bis 1/10^8 und insbesondere von mindestens von 10^2 bis 10^8 auf. Ist das mittlere Aspektverhältnis zu groß, so ist ein hoher Füllgrad notwendig, um eine gute Leitfähigkeit zu erzielen.

Erfindungsgemäß weist der stäbchenförmige Füllstoff (B3) Materialien auf, ausgewählt aus der Gruppe, bestehend aus Metallen, insbesondere Übergangsmetallen, metallisiertem Glas, Kohlenstoff, insbesondere einlagigen, vorzugsweise graphenartigen, sowie mehrlagigen Kohlenstoffnanoröhrchen und Gemischen hiervon. Besonders bevorzugt weist der stäbchenförmige Füllstoff die vorgenannten Materialien und insbesondere Kohlenstoffnanoröhrchen, vorzugsweise in einem Anteil von mehr als 90 Gew.%, insbesondere von mehr als 95 Gew.%, auf.

Der Anteil des stäbchenförmigen Füllstoffs (B3), bezogen auf das Gesamtgewicht der leitfähigen Paste, beträgt vorzugweise von 0,01 bis 10 Gew.%, noch bevorzugter von 0,01 bis 5 Gew.% und insbesondere von 0,1 bis 3 Gew.%.

In einer bevorzugten Ausführungsform beträgt der Anteil des Füllstoffs (B), bezogen auf das Gesamtgewicht der leitfähigen Paste von 0,03 Gew.% bis 30 Gew.%, noch bevorzugter 0,03 Gew.% bis 25 Gew.% und insbesondere 0,03 Gew.% bis 20 Gew.%. Weiter bevorzugt liegt der Füllstoff (B) in der leitfähigen Paste gleichmäßig verteilt vor. Die gleichmäßige Verteilung des Füllstoffs wird durch optische Auswertung (Elektronenmikroskop) bestimmt. Liegt der Anteil an Agglomeraten in einer Fläche von 1 mm² unter 20% des Füllstoffanteiles, so liegt eine gleichmäßige Verteilung vor.

Unter einem elastischen Binder (A) wird erfindungsgemäß ein Binder verstanden, der in der Lage ist unter Krafteinwirkung seine Form zu verändern und bei Wegfall der einwirkenden Kraft im Wesentlichen in seine Ursprungsform zurückzukehren. Erfindungsgemäß weist der Binder (A) eine Dehnung, gemessen nach Norm ISO 527 (2018-06-29), von mindestens 100 %, beispielweise von 100 bis 700 %, noch bevorzugter mindestens 200 %, beispielsweise 200 bis 700 %, und insbesondere von mindestens 300, beispielsweise 300 bis 700 % auf.

Weiter bevorzugt beträgt der Anteil des Binders (A), bezogen auf das Gesamtgewicht der leitfähigen Paste von 50 Gew.% bis 99 Gew.%, noch bevorzugter von 60 Gew.% bis 80 Gew.% und insbesondere von 65 Gew.% bis 80 Gew.%.

In einer weiteren bevorzugten Ausführungsform weist der elastische Binder (A), thermoplastische Elastomere, vorzugsweise ausgewählt aus der Gruppe, bestehend aus Siliconen, Urethanen, Epoxyden, Amiden, Estern oder Gemischen hiervon auf.

In einer weiteren bevorzugten Ausführungsform ist der elastische Binder (A) nicht leitfähig. In dieser Ausführungsform enthält der elastische Binder A vorzugsweise Bindemittel, ausgewählt aus der Gruppe der Polyurethane, Silicone, Fluorosilicone, Polycarbonate, Ethylvinylacetate (EVA), Acrylonitrilbutadien-styrol (ABS), Acrylate, Polyvinylchloride (PVC), Polyphenylether, Polystyrol, Polyamide, Nylon, Polyolefine, Polybulylterephthalate (PBT), Polyethylenterephthalate (PET), Fluoropolymere, Kautschuk, insbesondere NR (Naturkautschuk), BR (Butadienkautschuk), IR (Isoprenkautschuk), SBR (Styrol-Butadien-rubber), CR (Cloroprenkautschuk), BIIR (Isobuten-IsoprenKautschuk), CM (Chlorkautschuk), EP(D)M (Ethylen-Propylen-Dien-Kautschuk), EU, NBR (Nitril-Butadien-Kautschuk), IIR (Butyl-Kautschuk), CIIR (chlorierter Butylkautschuk), CSM (Chlorsulfonierter Ethylen-Kautschuk), AU (Polyurethan-Kautschuk), ECO (epichlorhydrin-Kautschuk), HNBR (Hydrierten Nitril-Butadien-Kautschuk), ACM (Acrylat-Kautschuk), FKM (Fluor-Kautschuk), VMQ (SilikonKautschuk), EAM = AEM (Ethylen-Acrylat-Kautschuk), FFKM Perfluor-Kautschuk TFE+PFVE Copolymer Tetrafluorethylen und Perluoralkylvinyl-Ether, FVMQ (Poly-TriflourpropylVinyl-MethylSiloxane), EVA (Ethylen-Vinylacetat-Kautschuk), Polyester, Acetale, Polymethylacrylate, ihren Copolymeren und Blends. Dabei beträgt der Anteil der vorgenannten Bindemittel am Binder (A), vorzugsweise mehr als 50 Gew.%, beispielsweise von 50 Gew.% bis 100 Gew.%.

In einer bevorzugten Ausführungsform der Erfindung weist die leitfähige Paste eine Dehnbarkeit von mindesten 30 %, beispielweise von 30 % bis 400 %, noch bevorzugter von mindestens 40 %, beispielsweise 40 % bis 300 %, und insbesondere von mindestens 60 %, beispielsweise von 80 % bis 150 % auf, gemessen nach Norm EN ISO 527-1 (Feb. 2012)

Die leitfähige Paste ist erfindungsgemäß auf einem elastomeren Substrat aufgebracht. Bevorzugte Substrate sind Kautschuke, da diese selbst elastische Eigenschaften besitzen, bzw. dehnbar sind. Bevorzugte Kautschuktypen sind: NR (Naturkautschuk), BR (Butadienkautschuk), IR (Isoprenkautschuk), SBR (Styrol-Butadien-rubber), CR (Cloroprenkautschuk), BIIR (Isobuten-IsoprenKautschuk), CM (Chlorkautschuk), EP(D)M (Ethylen-Propylen-Dien-Kautschuk), EU, NBR (Nitril-Butadien-Kautschuk), IIR (Butyl-Kautschuk), CIIR (chlorierter Butylkautschuk), CSM (Chlorsulfonierter Ethylen-Kautschuk), AU (Polyurethan-Kautschuk), ECO (epichlorhydrin-Kautschuk), HNBR (Hydrierten Nitril-Butadien-Kautschuk), ACM (Acrylat-Kautschuk), FKM (Fluor-Kautschuk), VMQ (SilikonKautschuk), EAM = AEM (Ethylen-Acrylat-Kautschuk), FFKM Perfluor-Kautschuk TFE+PFVE Copolymer Tetrafluorethylen und Perluoralkylvinyl-Ether, und/oder FVMQ (Poly-TriflourpropylVinyl-MethylSiloxane).

Eine erfindungsgemäße Ausführungsform umfasst die Verwendung der leitfähigen Paste zum Aufbringen auf elastomere Substrate.

Die leitfähige Paste, gemäß der Erfindung kann beispielsweise mit einem Verfahren umfassend folgende Verfahrensschritte hergestellt werden:
A) Es wird eine Dispersion umfassend einen elastischen Binder (A) hergestellt oder bereitgestellt;
B) in die Dispersion wird ein leitfähiger Füllstoff (B) eingebracht, wobei der leitfähige Füllstoff (B) folgende Komponenten umfasst: mindestens einen leitfähigen kugelförmigen Füllstoff (B1), mindestens einen leitfähigen plättchenförmigen Füllstoff (B2) und mindestens einen leitfähigen stäbchenartigen Füllstoff (B3).

Dabei gilt für die leitfähige Paste, den elastischen Binder (A), den leitfähigen Füllstoff (B), den leitfähigen kugelförmigen Füllstoff (B1), den mindestens einen leitfähigen plättchenförmigen Füllstoff (B2) und/oder den leitfähigen stäbchenartigen Füllstoff (B3), und insbesondere für deren bevorzuge Ausführungsformen, das in dem vorliegenden Text gesagte mutatis mutandis.

Die Herstellung der Dispersion in Schritt A) erfolgt vorzugsweise durch Dispergieren des elastischen Binders (A) in Wasser oder einem Lösungsmittel, beispielsweise Alkane, Alkohole, Säuren, Ether, Ester, Aromaten, Heteroaromaten, halogenierte Lösungsmittel, Wasser und ihre Gemische. Das Dispergieren erfolgt vorzugsweise in einem Mischaggregat, z.B. einem Speedmixer.

Das Einbringen des leitfähigen Füllstoffs (B) in Schritt B) in die Dispersion erfolgt vorzugsweise durch einen Mischvorgang, beispielweise durch statische und dynamische Mischsysteme. Unterstützt werden können diese durch Ultraschallmischvorgänge.

Ein weiterer Gegenstand der vorliegenden Erfindung ist die Verwendung der Paste zur Herstellung leitfähiger Strukturen beispielsweise Sensoren oder Aktoren. Für diese sind leitfähige und dehnbare Oberflächen von besonderem Interesse, da für diese Anwendungen Leitfähigkeit und Dehnung gleichermaßen benötigt werden.

Im Folgenden wird die Erfindung anhand mehrerer Beispiele näher erläutert.

### Beispiel 1: Herstellung einer erfindungsgemäßen leitfähigen Paste (Rezept Paste B)

Es wird eine Impranil DLU Dispersion (60 Gew.% Feststoffanteil Polyurethan in Wasser, Binder A) in eine für die Ansatzgröße passende Speedmixer Dose eingewogen (11 g).

Anschließend werden die Komponenten des Füllstoffs (B) beginnend mit den dispergierten Füllstoffen, (Rhenofit^{®} CNT (Füllstoff B3), 5,5 g)) und C-Sperse^{®} oder Birla Conductex SC Ultra^{®} (Füllstoff B1, 1,49 g) und dann der feste Füllstoff (eConduct Cu oder eConduct Glass (Füllstoff B2), 1,75 g) dazugegeben und grob mit einem Holzspatel vermengt. Es wird eine Minute im Speedmixer bei 2300 U/Min. gemischt, mit einem Holzspatel umgerührt und erneut im Speedmixer (1 Minute bei 2300 U/Min.) gemischt. Nach der Applikation auf einem Elastomer (TPU-Folie) wird die Paste bei 60 °C 2h lang getrocknet.

Es wird die Paste B erhalten. Über eine Vier-Punkt-Messung an der ausgehärteten Paste (B) wird der elektrische Widerstand gemessen. Als Ergebnis wird ein Werte von 860 [Ω] erhalten, der sehr niedrig für den geringen Füllstoffanteil ist.

Zur Herstellung der obengenannten Birla Conductex SC Ultra Kohlenstoffdispersionen werden 89 Gew.% Wasser in einer Speedmixer Dose vorgelegt ,1 % Natrium-dodecylbenzosulfonat tech. hinzugegeben und für 15 Sec. im Speedmixer bei 2300 U/Min. vorgemischt.

Im Ergebnis wird die erfindungsgemäße Paste B erhalten. Über eine Vier-Punkt-Messung an der ausgehärteten Paste (B) wird der elektrische Widerstand gemessen Als Ergebnis wird ein Werte von 860 [Ω] erhalten.

Anschließend wird das zu dispergierende Kohlenstoffpulver in einem Schwung eingewogen und erneut im Speedmixer gemischt. Danach wird die Dispersion vor jeder Anwendung mit einem Spatel aufgerührt und im Speedmixer (1 Min. bei 2300 U/Min.) aufgerührt.

### Beispiel 2: Herstellung von mehreren erfindungsgemäßen leitfähigen Pasten (A, C, D, E) und von Vergleichpasten (F, G, H)

Analog dem im Beispiel 1 beschriebenen Verfahren werden die erfindungsgemäßen Pasten (A, C, D, E) und die nicht erfindungsgemäßen Pasten (F, G, H) hergestellt. Die verwendeten Mengenverhältnisse sind in der nachfolgenden Tabelle illustriert.

**Tab.1**

| **Probenbezeichnung** | **Rhenofit^{®} CNT-3 (1 Gew.% in Wasser)** | **eConduct Cu(Ag)** | **eConduct Glass(Ag)** | **Birla^{®} Conductex SC Ultra** | **C-Sperse^{®}** |
|---|---|---|---|---|---|
| Erfindungsgemäße Paste A | 0,5 Gew.% | | 8 Gew.% | 2,41 Gew.% | |
| Erfindungsgemäße Paste C | 0,5 Gew.% | 8 Gew.% | 8 Gew.% | 2,41 Gew.% | |
| Erfindungsgemäße Paste D | 0,5 Gew.% | | 16 Gew.% | | 2,41 Gew.% |
| Erfindungsgemäße Paste E3 | 0,5 Gew.% | | 16 Gew.% | | 5 Gew.% |
| Nicht erfindungsgemäße Paste F | 0,5 Gew.% | - | - | - | - |
| Nicht erfindungsgemäße Paste G | 0,5 Gew.% | - | - | 2,41 Gew.% | |
| Nicht erfindungsgemäße Paste H | | | 16 Gew.% | 2,41 Gew.% | |

Die in der obigen Tabelle genannten Füllstoffe sind jeweils in Impranil DLU dispergiert. Dabei sind die Rezepturen bezogen auf Gew.% in 100 g Impranil DLU Dispersion angegeben.

### Beispiel 3: Bestimmung des elektrischen Widerstands der erfindungsgemäßen Pasten und der Vergleichspasten

Es wird der elektrische Widerstand der erfindungsgemäßen Pasten und der Vergleichspasten mittels einer Vier-Punkt-Messung bestimmt. Die Ergebnisse sind in der nachfolgenden Tabelle dargestellt.

**Tab.2**

| **Probenbezeichnung** | **Widerstand [Ω]4** |
|---|---|
| Erfindungsgemäße Paste A | 2 300 |
| Erfindungsgemäße Paste C | 780 |
| Erfindungsgemäße Paste D | 740 |
| Erfindungsgemäße Paste E3 | 570 |
| Nicht erfindungsgemäße Paste F | 40 000 |
| Nicht erfindungsgemäße Paste G | 7500 |
| Nicht erfindungsgemäße Paste H | 13 000 |

Wie aus der oben gezeigten Tabelle hervorgeht, zeigen die erfindungsgemäßen Pasten deutlich geringere Widerstände als die nicht erfindungsgemäßen Vergleichspasten. Dies ist deshalb besonders bemerkenswert, da die erfindungsgemäßen Pasten aufgrund des geringen Füllstoffgrads vergleichbare Dehnbarkeiten haben wie die nicht erfindungsgemäßen. Darüber hinaus sind die geringen Widerstände deshalb bemerkenswert, weil üblicherweise hierfür wesentlich mehr Füllstoff nötig ist.

Wird im vorliegenden Text auf eine Norm Bezug genommen, so gilt, falls nicht anders angegeben, die jeweils am Anmeldetag gültige Norm.

## Patentansprüche

1. Elektrisch leitfähige Paste umfassend einen elastischen Binder (A), wobei der Binder (A) eine Dehnung, gemessen nach Norm ISO 527 (2018-06-29), von mindestens 100 %, aufweist und einen leitfähigen Füllstoff (B), **dadurch gekennzeichnet, dass** der leitfähige Füllstoff (B) folgende Komponenten umfasst: mindestens einen leitfähigen kugelförmigen Füllstoff (B1), mindestens einen leitfähigen plättchenförmigen Füllstoff (B2) und mindestens einen leitfähigen stäbchenartigen Füllstoff (B3), wobei
- der kugelförmige Füllstoff (B1) Materialien aufweist, ausgewählt aus der Gruppe, bestehend aus Metallen, insbesondere Übergangsmetallen, Erd- und Alkalimetallen und ihren Salzen, metallisiertem Glas, metallisierter Keramik, Kohlenstoff und deren Gemische,
- wobei der plättchenförmige Füllstoff (B2) Materialien aufweist ausgewählt aus der Gruppe, bestehend aus Metallen, insbesondere Übergangsmetallen, metallisiertem Glas, metallisierter Keramik, Kohlenstoff und deren Gemische und
- wobei der stäbchenförmige Füllstoff (B3) Materialien aufweist, ausgewählt aus der Gruppe, bestehend aus Metallen, insbesondere Übergangsmetallen, metallisiertem Glas, Kohlenstoff, insbesondere einlagigen, vorzugsweise graphenartigen, sowie mehrlagigen Kohlenstoffnanoröhrchen und Gemischen hiervon, **dadurch gekennzeichnet, dass** die elektrisch leitfähige Paste auf einem elastomeren Substrat aufgebracht ist.

2. Elektrisch leitfähige Paste nach Anspruch 1, **dadurch gekennzeichnet, dass** der kugelförmige Füllstoff (B1) einen mittleren Partikeldurchmesser, gemessen nach ISO 21501-2:2019-11 von höchstens 200 µm, bevorzugt von 0,02 µm bis 200 µm, noch bevorzugter von höchstens 100 µm, beispielsweise von 0,02 µm bis 100 µm, noch bevorzugter von 0,02 µm bis 50 µm und insbesondere von 0,02 µm bis 10 µm aufweist.

3. Elektrisch leitfähige Paste nach einem oder mehreren der vorangehenden Ansprüche, **dadurch gekennzeichnet, dass** der Anteil des kugelförmigen Füllstoffs (B1), bezogen auf das Gesamtgewicht der leitfähigen Paste von 0,1 bis 50 Gew. %, noch bevorzugter von 1 bis 15 Gew.%, noch bevorzugter von 1 bis 10 Gew.%, noch bevorzugter von 1 bis 8 Gew.% und insbesondere von 1 bis 5 Gew.% beträgt.

4. Elektrisch leitfähige Paste nach einem oder mehreren der vorangehenden Ansprüche, **dadurch gekennzeichnet, dass** das Aspektverhältnis des plättchenförmigen Füllstoffs (B2) mindestens 1 / 10 und kleiner 1 / 10^6 ist.

5. Elektrisch leitfähige Paste nach einem oder mehreren der vorangehenden Ansprüche, **dadurch gekennzeichnet, dass** der plättchenförmige Füllstoff (B2) eine mittlere Partikelgröße ISO 21501-2:2019-11 von höchstens 150 µm, beispielsweise von 0,02 bis 150 µm, noch bevorzugter von höchstens 100 µm, beispielsweise von 2 µm bis 100 µm und insbesondere von 5 bis 80 µm aufweist.

6. Elektrisch leitfähige Paste nach einem oder mehreren der vorangehenden Ansprüche, **dadurch gekennzeichnet, dass** der Anteil des plättchenförmigen Füllstoffs (B2), bezogen auf das Gesamtgewicht der leitfähigen Paste von 0,5 bis 50 Gew.%, noch bevorzugter von 5 bis 40 Gew.% und insbesondere von 10 bis 25 Gew.% beträgt.

7. Elektrisch leitfähige Paste nach einem oder mehreren der vorangehenden Ansprüche, **dadurch gekennzeichnet, dass** der stäbchenförmige Füllstoff (B3) ein mittleres Aspektverhältnis von mindestens 0,1, beispielsweise von 1/10 bis 1/10^8 und insbesondere von 10^2 bis 10^8 aufweist.

8. Elektrisch leitfähige Paste nach einem oder mehreren der vorangehenden Ansprüche, **dadurch gekennzeichnet, dass** der Anteil des stäbchenförmigen Füllstoffs (B3), bezogen auf das Gesamtgewicht der leitfähigen Paste von 0,01 bis 10 Gew.%, noch bevorzugter von 0,01 bis 5 Gew.% und insbesondere von 0,1 bis 3 Gew.% beträgt.

9. Elektrisch leitfähige Paste nach einem oder mehreren der vorangehenden Ansprüche, **dadurch gekennzeichnet, dass** der Anteil des Füllstoffs (B), bezogen auf das Gesamtgewicht der leitfähigen Paste von 0,03 Gew.% bis 30 Gew-%, noch bevorzugter von 0,03 Gew.% bis 25 Gew.% und insbesondere von 0,03 Gew.% bis 20 Gew.% beträgt.

10. Elektrisch leitfähige Paste nach einem oder mehreren der vorangehenden Ansprüche, **dadurch gekennzeichnet, dass** der Anteil des Binders (A), bezogen auf das Gesamtgewicht der leitfähigen Paste von 50 Gew.% bis 99 Gew.%, noch bevorzugter von 60 Gew.% bis 80 Gew.% und insbesondere von 65 Gew.% bis 80 Gew.% beträgt.

11. Elektrisch leitfähige Paste nach einem oder mehreren der vorangehenden Ansprüche, **dadurch gekennzeichnet, dass** der elastische Binder (A), thermoplastische Elastomere, vorzugsweise ausgewählt aus der Gruppe bestehend aus Siliconen, Urethanen, Epoxyden, Amiden, Estern oder Gemischen hiervon aufweist.

12. Elektrisch leitfähige Paste nach einem oder mehreren der vorangehenden Ansprüche, **gekennzeichnet durch** eine Dehnbarkeit von mindesten 30 %, beispielweise von 30 % bis 400 %, noch bevorzugter von mindestens 40 %, beispielsweise von 40 % bis 300 %, und insbesondere von mindestens 60 %, beispielsweise von 60 % bis 150 %, noch bevorzugter von 80 % bis 150 %, gemessen nach Norm EN ISO 527-1 (Feb. 2012).

13. Verwendung einer elektrisch leitfähigen Paste umfassend einen elastischen Binder (A) wobei der Binder (A) eine Dehnung, gemessen nach Norm ISO 527 (2018-06-29), von mindestens 100 %, aufweist und einen leitfähigen Füllstoff (B), wobei der leitfähige Füllstoff (B) folgende Komponenten umfasst: mindestens einen leitfähigen kugelförmigen Füllstoff (B1), mindestens einen leitfähigen plättchenförmigen Füllstoff (B2) und mindestens einen leitfähigen stäbchenartigen Füllstoff (B3), wobei
- der kugelförmige Füllstoff (B1) Materialien aufweist, ausgewählt aus der Gruppe, bestehend aus Metallen, insbesondere Übergangsmetallen, Erd- und Alkalimetallen und ihren Salzen, metallisiertem Glas, metallisierter Keramik, Kohlenstoff und deren Gemische,
- wobei der plättchenförmige Füllstoff (B2) Materialien aufweist ausgewählt aus der Gruppe, bestehend aus Metallen, insbesondere Übergangsmetallen, metallisiertem Glas, metallisierter Keramik, Kohlenstoff und deren Gemische und
- wobei der stäbchenförmige Füllstoff (B3) Materialien aufweist, ausgewählt aus der Gruppe, bestehend aus Metallen, insbesondere Übergangsmetallen, metallisiertem Glas, Kohlenstoff, insbesondere einlagigen, vorzugsweise graphenartigen, sowie mehrlagigen Kohlenstoffnanoröhrchen und Gemischen hiervon, zum Aufbringen auf elastomere Substrate.

14. Verwendung nach Anspruch 13, **dadurch gekennzeichnet, dass** die elektrisch leitfähigen Paste eine Paste wie in einem oder mehreren der Ansprüche 2 bis 12 beschrieben ist.

## Claims

1. Electrically conductive paste comprising an elastic binder (A) and a conductive filler (B), where the binder (A) has an extension, measured according to standard ISO 527 (2018-06-29), of at least 100%, **characterized in that** the conductive filler (B) comprises the following components: at least one conductive spherical filler (B1), at least one conductive platelet-shaped filler (B2), and at least one conductive rodletlike filler (B3), wherein
- the spherical filler (B1) comprises materials selected from the group consisting of metals, more particularly transition metals, alkali and alkaline earth metals and salts thereof, metallized glass, metallized ceramic, carbon, and mixtures thereof,
- wherein the platelet-shaped filler (B2) comprises materials selected from the group consisting of metals, more particularly transition metals, metallized glass, metallized ceramic, carbon, and mixtures thereof, and
- wherein the rodlet-shaped filler (B3) comprises materials selected from the group consisting of metals, more particularly transition metals, metallized glass, carbon, more particularly single-layer, preferably graphenelike, and also multilayer carbon nanotubes, and mixtures thereof, **characterized in that** the electrically conductive paste is applied on an elastomeric substrate.

2. Electrically conductive paste according to Claim 1, **characterized in that** the spherical filler (B1) has a mean particle diameter, measured according to ISO 21501-2:2019-11, of at most 200 µm, preferably of 0.02 µm to 200 µm, more preferably of at most 100 µm, as for example of 0.02 µm to 100 µm, more preferably of 0.02 µm to 50 µm, and more particularly of 0.02 µm to 10 µm.

3. Electrically conductive paste according to one or more of the preceding claims, **characterized in that** the fraction of the spherical filler (B1), based on the total weight of the conductive paste, is from 0.1 to 50 wt%, more preferably from 1 to 15 wt%, more preferably from 1 to 10 wt%, more preferably from 1 to 8 wt%, and more particularly from 1 to 5 wt%.

4. Electrically conductive paste according to one or more of the preceding claims, **characterized in that** the aspect ratio of the platelet-shaped filler (B2) is at least 1/10 and less than 1/10^6.

5. Electrically conductive paste according to one or more of the preceding claims, **characterized in that** the platelet-shaped filler (B2) has a mean particle size - ISO 21501-2:2019-11 - of at most 150 µm, as for example of 0.02 to 150 µm, more preferably of at most 100 µm, as for example of 2 µm to 100 µm, and more particularly of 5 to 80 µm.

6. Electrically conductive paste according to one or more of the preceding claims, **characterized in that** the fraction of the platelet-shaped filler (B2), based on the total weight of the conductive paste, is from 0.5 to 50 wt%, more preferably from 5 to 40 wt%, and more particularly from 10 to 25 wt%.

7. Electrically conductive paste according to one or more of the preceding claims, **characterized in that** the rodlet-shaped filler (B3) has a mean aspect ratio of at least 0.1, as for example of 1/10 to 1/10^8, and more particularly of 10^2 to 10^8.

8. Electrically conductive paste according to one or more of the preceding claims, **characterized in that** the fraction of the rodlet-shaped filler (B3), based on the total weight of the conductive paste, is from 0.01 to 10 wt%, more preferably from 0.01 to 5 wt%, and more particularly from 0.1 to 3 wt%.

9. Electrically conductive paste according to one or more of the preceding claims, **characterized in that** the fraction of the filler (B), based on the total weight of the conductive paste, is from 0.03 wt% to 30 wt%, more preferably from 0.03 wt% to 25 wt%, and more particularly from 0.03 wt% to 20 wt%.

10. Electrically conductive paste according to one or more of the preceding claims, **characterized in that** the fraction of the binder (A), based on the total weight of the conductive paste, is from 50 wt% to 99 wt%, more preferably from 60 wt% to 80 wt%, and more particularly from 65 wt% to 80 wt%.

11. Electrically conductive paste according to one or more of the preceding claims, **characterized in that** the elastic binder (A) comprises thermoplastic elastomers preferably selected from the group consisting of silicones, urethanes, epoxides, amides, esters, or mixtures thereof.

12. Electrically conductive paste according to one or more of the preceding claims, **characterized by** an extensibility of at least 30%, as for example of 30% to 400%, more preferably of at least 40%, as for example of 40% to 300%, and more particularly of at least 60%, as for example of 60% to 150%, more preferably of 80% to 150%, measured according to standard EN ISO 527-1 (Feb. 2012).

13. Use of an electrically conductive paste comprising an elastic binder (A) and a conductive filler (B), where the binder (A) has an extension, measured according to standard ISO 527 (2018-06-29), of at least 100%, wherein the conductive filler (B) comprises the following components: at least one conductive spherical filler (B1), at least one conductive platelet-shaped filler (B2), and at least one conductive rodletlike filler (B3), wherein
- the spherical filler (B1) comprises materials selected from the group consisting of metals, more particularly transition metals, alkali and alkaline earth metals and salts thereof, metallized glass, metallized ceramic, carbon, and mixtures thereof,
- wherein the platelet-shaped filler (B2) comprises materials selected from the group consisting of metals, more particularly transition metals, metallized glass, metallized ceramic, carbon, and mixtures thereof, and
- wherein the rodlet-shaped filler (B3) comprises materials selected from the group consisting of metals, more particularly transition metals, metallized glass, carbon, more particularly single-layer, preferably graphenelike, and also multilayer carbon nanotubes, and mixtures thereof, for application to elastomeric substrates.

14. Use according to Claim 13, **characterized in that** the electrically conductive paste is a paste as described in one or more of Claims 2 to 12.

## Revendications

1. Pâte électriquement conductrice comprenant un liant élastique (A), le liant (A) ayant un allongement, mesuré selon la norme ISO 527 (2018-06-29), d'au moins 100 %, et une charge conductrice (B), **caractérisée en ce que** la charge conductrice (B) comprend les composants suivants : au moins une charge conductrice sphérique (B1), au moins une charge conductrice en forme de plaquettes (B2) et au moins une charge conductrice en forme de bâtonnets (B3),
- la charge sphérique (B1) comportant des matières choisies dans le groupe constitué par les métaux, en particulier les métaux de transition, les métaux alcalins et alcalino-terreux et leurs sels, le verre métallisé, la céramique métallisée, le carbone et des mélanges de ceux-ci,
- la charge en forme de plaquettes (B2) comportant des matières choisies dans le groupe constitué par les métaux, en particulier les métaux de transition, le verre métallisé, la céramique métallisée, le carbone et des mélanges de ceux-ci,
- la charge en forme de bâtonnets (B3) comportant des matières choisies dans le groupe constitué par les métaux, en particulier les métaux de transition, le verre métallisé, le carbone, en particulier les nanotubes de carbone monocouches, de préférence de type graphène, ainsi que multicouches et des mélanges de ceux-ci, **caractérisée en ce que** la pâte électriquement conductrice est appliquée sur un substrat élastomère.

2. Pâte électriquement conductrice selon la revendication 1, **caractérisée en ce que** la charge sphérique (B1) présente un diamètre moyen de particule, mesuré selon ISO 21501-2:2019-11, d'au maximum 200 µm, de préférence de 0,02 µm à 200 µm, de façon encore plus préférée d'au maximum 100 µm, par exemple de 0,02 µm à 100 µm, de façon encore plus préférée de 0,02 µm à 50 µm et en particulier de 0,02 µm à 10 µm.

3. Pâte électriquement conductrice selon une ou plusieurs des revendications précédentes, **caractérisée en ce que** la proportion de la charge sphérique (B1), par rapport au poids total de la pâte conductrice, vaut de 0,1 à 50 % en poids, de façon encore plus préférée de 1 à 15 % en poids, de façon encore plus préférée de 1 à 10 % en poids, de façon encore plus préférée de 1 à 8 % en poids et en particulier de 1 à 5 % en poids.

4. Pâte électriquement conductrice selon une ou plusieurs des revendications précédentes, **caractérisée en ce que** le rapport de forme de la charge en forme de plaquettes (B2) est d'au moins 1 / 10 et inférieur à 1 / 10⁶.

5. Pâte électriquement conductrice selon une ou plusieurs des revendications précédentes, **caractérisée en ce que** la charge sphérique (B2) présente une taille moyenne de particule ISO 21501-2:2019-11 d'au maximum 150 µm, par exemple de 0,02 µm à 150 µm, de façon encore plus préférée d'au maximum 100 µm, par exemple de 2 µm à 100 µm et en particulier de 5 à 80 µm.

6. Pâte électriquement conductrice selon une ou plusieurs des revendications précédentes, **caractérisée en ce que** la proportion de la charge en forme de plaquettes (B2), par rapport au poids total de la pâte conductrice, vaut de 0,5 à 50 % en poids, de façon encore plus préférée de 5 à 40 % en poids et en particulier de 10 à 25 % en poids.

7. Pâte électriquement conductrice selon une ou plusieurs des revendications précédentes, **caractérisée en ce que** la charge en forme de bâtonnets (B3) présente un rapport de forme moyen d'au moins 0,1, par exemple de 1/10 à 1/10⁸ et en particulier de 10² à 10⁸.

8. Pâte électriquement conductrice selon une ou plusieurs des revendications précédentes, **caractérisée en ce que** la proportion de la charge en forme de plaquettes (B3), par rapport au poids total de la pâte conductrice, vaut de 0,01 à 10 % en poids, de façon encore plus préférée de 0,01 à 5 % en poids et en particulier de 0,1 à 3 % en poids.

9. Pâte électriquement conductrice selon une ou plusieurs des revendications précédentes, **caractérisée en ce que** la proportion de la charge (B), par rapport au poids total de la pâte conductrice, vaut de 0,03 à 30 % en poids, de façon encore plus préférée de 0,03 à 25 % en poids et en particulier de 0,03 à 20 % en poids.

10. Pâte électriquement conductrice selon une ou plusieurs des revendications précédentes, **caractérisée en ce que** la proportion du liant (A), par rapport au poids total de la pâte conductrice, vaut de 50 % en poids à 99 % en poids, de façon encore plus préférée de 60 % en poids à 80 % en poids et en particulier de 65 % en poids à 80 % en poids.

11. Pâte électriquement conductrice selon une ou plusieurs des revendications précédentes, **caractérisée en ce que** le liant élastique (A) comporte des élastomères thermoplastiques, de préférence choisis dans le groupe constitué par les silicones, uréthanes, époxydes, amides, esters ou des mélanges de ceux-ci.

12. Pâte électriquement conductrice selon une ou plusieurs des revendications précédentes, **caractérisée par** une aptitude à l'allongement d'au moins 30 %, par exemple de 30 % à 400 %, de façon encore plus préférée d'au moins 40 %, par exemple de 40 % à 300 %, et en particulier d'au moins 60 %, par exemple de 60 % à 150 %, de façon encore plus préférée de 80 % à 150 %, mesurée selon la norme EN ISO 527-1 (fév. 2012).

13. Utilisation d'une pâte électriquement conductrice comprenant un liant élastique (A), le liant (A) ayant un allongement, mesuré selon la norme ISO 527 (2018-06-29), d'au moins 100 %, et une charge conductrice (B), la charge conductrice (B) comprenant les composants suivants : au moins une charge conductrice sphérique (B1), au moins une charge conductrice en forme de plaquettes (B2) et au moins une charge conductrice en forme de bâtonnets (B3),
- la charge sphérique (B1) comportant des matières choisies dans le groupe constitué par les métaux, en particulier les métaux de transition, les métaux alcalins et alcalino-terreux et leurs sels, le verre métallisé, la céramique métallisée, le carbone et des mélanges de ceux-ci,
- la charge en forme de plaquettes (B2) comportant des matières choisies dans le groupe constitué par les métaux, en particulier les métaux de transition, le verre métallisé, la céramique métallisée, le carbone et des mélanges de ceux-ci,
- la charge en forme de bâtonnets (B3) comportant des matières choisies dans le groupe constitué par les métaux, en particulier les métaux de transition, le verre métallisé, le carbone, en particulier les nanotubes de carbone monocouches, de préférence de type graphène, ainsi que multicouches et des mélanges de ceux-ci, pour l'application sur des substrats élastomères.

14. Utilisation selon la revendication 13, **caractérisée en ce que** la pâte électriquement conductrice est une pâte telle qu'elle est décrite dans une ou plusieurs des revendications 2 à 12.
